# EUROPEAN PATENT APPLICATION

(11) **EP 3 086 298 A1**
(43) Date of publication of application: **26.10.2016**
(21) Application number: 15465511.2
(22) Date of filing: 22.04.2015
(51) Int. Cl.: G07C 9/00, B60R 25/20

(54) **AUTHORISATION CONTROL METHOD FOR A VEHICLE AND CORRESPONDING ARRANGEMENT**

(71) Applicant: Continental Automotive GmbH, 30165 Hannover (DE)
(72) Inventor: Popa, Razvan, 307285 Mosnita Noua (RO); Mitrici, Flavius, 307220 Giroc (RO); Jianu, Florin, 300733 Timisoara (RO)

(57) **Abstract**

The invention relates to an authorization control method for a vehicle, comprising the steps of storing an authorization list on a storage device of a server (2), wherein the authorization list includes one or more authorization entries, each authorization entry being allocated to at least one portable identification device (4) that is authorized to release at least one function of the vehicle; sending the authorization list from the server (2) to a communication module of the vehicle; sending identification data from the identification device (4) to the communication module; and checking whether the identification device (4) is authorized to release a function of the vehicle by comparing the identification data with the authorization entries of the authorization list.

## Description

This invention relates to an authorization control method for a vehicle and an authorization control arrangement for a vehicle.

Such authorization control methods and arrangements are used, for instance, in the commercial fleet management in order to authorize selected drivers to use specific vehicles. By means of such methods and arrangements the effort necessary to economically manage a fleet of vehicles can be reduced considerably.

In particular in the field of automobile fleet management, solutions have been developed, which allow for managing the authorization rights of selected drivers from remote locations. Such known solutions use wireless communication techniques, e.g. mobile communication, for verifying whether a driver is authorized to use a specific vehicle. WO 2008/044093 A1 discloses such a solution.

The possibility to modify authorization rights from remote locations leads to an increased security against unauthorized usage of the vehicles of the fleet. Further, such methods and arrangements can be used to authorize selected drivers to use specific vehicle equipment, such as the tachograph of a truck.

However, the known systems allowing for managing the authorizations rights from remote locations need a working wireless data communication to a control center at the point of time the driver requests access to a function of the vehicle. This can cause severe problems when the vehicle is located at a place, where a wireless data connection to the control center cannot be set up.

The above described problem comes along with the working principle of the known systems. These systems use vehicle-side authorization control modules that request authorization information from the control center only when the driver requests access to a function of the vehicle, e.g. by means of a portable identification device, such as an electronic key. This request, however, may take place at a location where no wireless data communication is available. Since the vehicle's authorization control module cannot set up a data connection to the control center, a verification whether the driver is authorized to the requested function of the vehicle cannot take place.

Therefore, the object of the invention is to provide a solution that allows for a more efficient, secure and flexible authorization control management for vehicles.

The object is solved by means of the authorization control method for a vehicle according to claim 1.

The authorization control method according to the invention comprises the step of storing an authorization list on a storage device of a server, wherein the authorization list includes one or more authorization entries. Each authorization entry of the authorization list is allocated to at least one portable identification device that is authorized to release at least one function of the vehicle. Functions of the vehicle are, for instance, the locking and unlocking function for granting access to the vehicle, the ignition function for starting the vehicle's engine or the tachograph function for recording the vehicle's speed or the driven distance. The authorization control method according to the invention further comprises the step of sending the authorization list from the server to a communication module of the vehicle. By sending the authorization list to the vehicle, the vehicle receives information about the authorization rights of one or more specific portable identification devices. By means of the method step of sending identification data from the identification device to the communication module, the vehicle also receives information about the identification device that requests the release of a function of the vehicle. According to the invention the authorization control method also comprises the step of checking whether the identification device is authorized to release a function of the vehicle by comparing the identification data with the authorization entries of the authorization list.

The step of checking whether the identification device is authorized to release a function of the vehicle by comparing the identification data with the authorization entries of the authorization list is preferably performed by an authorization control module of the vehicle comprising the communication module.

In one illustrative embodiment of the method according to the invention each authorization entry of the authorization list includes an authorization code. Further, the identification data that is sent from the portable identification device of the driver to the communication module of the vehicle includes a unique identification code. By checking whether the identification device is authorized to release a function of the vehicle, the unique identification code is compared with the authorization codes of the authorization list. The function of the vehicle is released when the unique identification code matches with one of the authorization codes of the authorization list either directly or after a conversion of the unique identification code has taken place.

A preferred embodiment of the authorization control method according to the invention comprises the step of generating the authorization list by means of a client device. Generating the authorization list may also include the step of generating one or more authorization entries of the authorization list. By generating an authorization list the vehicles of a new or modified fleet can be allocated to selected drivers or a group of selected drivers. The possibility to generate an authorization list by means of the client device reduces the effort and time necessary to put a new or modified fleet of vehicles into operation. Alternatively and additionally the authorization control method according to the invention comprises the step of modifying one or more authorization entries of the authorization list by means of the client device. This allows for an efficient re-structuring of authorization rights when new drivers or vehicles become available for a specific fleet. Also, the fleet manager is able to quickly react on temporarily limited availability of drivers or vehicles. A limited availability of vehicles may be caused by an accident or a planned maintenance of one or more vehicles. It is also possible that single drivers are no longer available, because they have left the company that is operating the fleet of vehicles. Such changed circumstances can be taken into account by the fleet manager by modifying one or more authorization entries of the authorization list by means of the client device. The client device may be a personal computer, preferably a portable personal computer, such as a laptop or a tablet-computer, or a portable communication device, such as a mobile phone.

In an advantageous embodiment of the authorization control method according to the invention the sending of the authorization list from the server to the communication module of the vehicle happens periodically, e.g. every 12 hours or once a day. Alternatively or additionally the sending of the authorization list from the server to the communication module of the vehicle is initiated through a command that is sent from the client device to the server.

Another embodiment of the authorization control method according to the invention comprises the step of sending the authorization list from the client device to the server. It is preferred that a local area network and/or an internet connection is used for sending the authorization list from the client device to the server. The local area network allows for a secure and quick data connection between the client device and the server. However, in case the server and the client device are located remote from each other it is advantageous to use an internet connection for sending the authorization list from the client device to the server. Such an internet connection might be based on mobile radio communication and preferably uses the LTE, 3G and/or GPRS standard.

An advantageous embodiment of the authorization control method according to the invention comprises the step of initiating the sending of the authorization list from the client device to the server by using an application software, preferably a web application software, on the client device. This can be, for instance, an application installed on a tablet-computer, laptop or mobile phone having access to the internet. Alternatively or additionally the authorization control method according to the invention comprises the step of generating the authorization list by using an application software, preferably a web application software, on the client device. Further, the authorization control method according to the invention may comprise the step of modifying one or more authorization entries of the authorization list by using an application software, preferably a web application software, on the client device. The application software for initiating the sending of the authorization list from the client device to the server, generating the authorization list and modifying one or more authorization entries of the authorization list can be the same application software allowing for all these actions. However, also independent application software can be used to perform these actions. The use of suitable application software on the client device allows the fleet manager to quickly react on changed circumstances even when he has no physical access to the vehicles of the fleet.

In one embodiment of the authorization control method according to the invention the step of sending the authorization list from the server to the communication module of the vehicle takes place by using a local area network or an internet connection. It is preferred that the local area network is a wireless local area network. It is also preferred that the internet connection is based on mobile radio communication and preferably uses the LTE, 3G and/or GPRS standard.

Another embodiment of the authorization control method according to the invention comprises the step of coupling the identification device with an authorization control module of the vehicle. The coupling of the identification device with the authorization control module of the vehicle can be a structural coupling and/or a functional coupling. It is preferred that the step of coupling the identification device with the authorization control module of the vehicle further comprises step of plugging in the identification device into a compartment of the authorization control module. In this case the coupling of the identification device with the authorization control module of the vehicle is a structural coupling. Alternatively or additionally the step of coupling the identification device with the authorization control module of the vehicle further comprises step of establishing a wireless data connection between the identification device and the authorization control module. In this case the coupling of the identification device with the authorization control module of the vehicle is a functional coupling. The identification device may include a USB storage device, a smart card or an RFID card for storing the identification data that is sent from the identification device to the communication module of the vehicle. However, the identification device can also be a mobile communication device such as a mobile phone or a tablet-computer.

The coupling of the identification device with the authorization control module of the vehicle preferably automatically initiates the sending of the identification data from the identification device to the communication module of the vehicle. Thereby the communication between the identification device and the authorization control module of the vehicle starts without any further actions of the driver. In case of a structural coupling of the identification device with the authorization control module of the vehicle, e.g. by plugging in the identification device into a compartment of the authorization control module, the sending of the identification data from the identification device to the communication module of the vehicle starts after the driver has properly established the structural connection between the identification device and the authorization control module of the vehicle.

Another embodiment of the authorization control method according to the invention comprises the step of releasing the function of the vehicle to which the identification device is authorized. Therefore, after it has been checked whether the identification device is authorized to release a function of the vehicle by comparing the identification data with the authorization entries of the authorization list, the function of the vehicle is released when the identification device of the driver is authorized to use this function. This may be the release of the tachograph function or the ignition function of the vehicle. However, this can also include the release of an audio or entertainment system of the vehicle. The authorization control method preferably also comprises the step of performing the function of the vehicle to which the identification device of the driver is authorized. An illustrative example can be given in view of the locking and unlocking function of the vehicle. By just releasing this function of the vehicle, no lock or unlock process takes place. The vehicle has to be locked or unlocked manually after this function is released. Due to the step that this function is now performed, preferably automatically after the coupling of the identification device with the authorization control module of the vehicle has taken place, the driver no longer has to manually lock or unlock the vehicle after this function has been released.

In a particular embodiment of the authorization control method according to the invention each authorization entry includes information regarding the scope of authorization rights of the allocated identification device. This information can be used to limit the authorization rights of identification devices of specific drivers. Some vehicles are equipped with electronic devices that can only be operated by specifically qualified drivers. Since each authorization entry includes information regarding the scope of authorization rights of the allocated identification device, it is possible to release the functions of such electronic devices only to identification devices of a selected group of drivers. Thereby such electronic devices can be protected against improper use through unqualified drivers.

The object of the invention is also solved by means of an authorization control arrangement for a vehicle according to claim 10.

The authorization control arrangement for a vehicle according to the invention comprises a server having a storage device, an authorization control module having a communication module, a portable identification device and a client device. The server is positioned remote from the vehicle whereas the authorization control module is disposed in or at the vehicle. The server, the authorization control module, the identification device and the client device are configured for communicating with each other according to one of the above described embodiments of the authorization control method. Regarding the advantages of the authorization control arrangement according to the invention it is referred to the advantages of the authorization control method according to the invention.

In a preferred embodiment of the authorization control arrangement according to the invention the authorization control module is coupled with a bus system of the vehicle for releasing a function of the vehicle. By means of the connection to the bus system of the vehicle control signals can be sent to all electronic devices of the vehicle that are connected to the bus system of the vehicle themselves.

In another embodiment of the authorization control arrangement according to the invention the identification device includes a USB storage device, a smart card or an RFID card. Alternatively, the identification device is a mobile communication device such as a mobile phone.

In another advantageous embodiment of the authorization control arrangement according to the invention the client device is a personal computer, preferably a portable personal computer, such as a laptop or a tablet-computer, or a portable communication device such as a mobile phone.

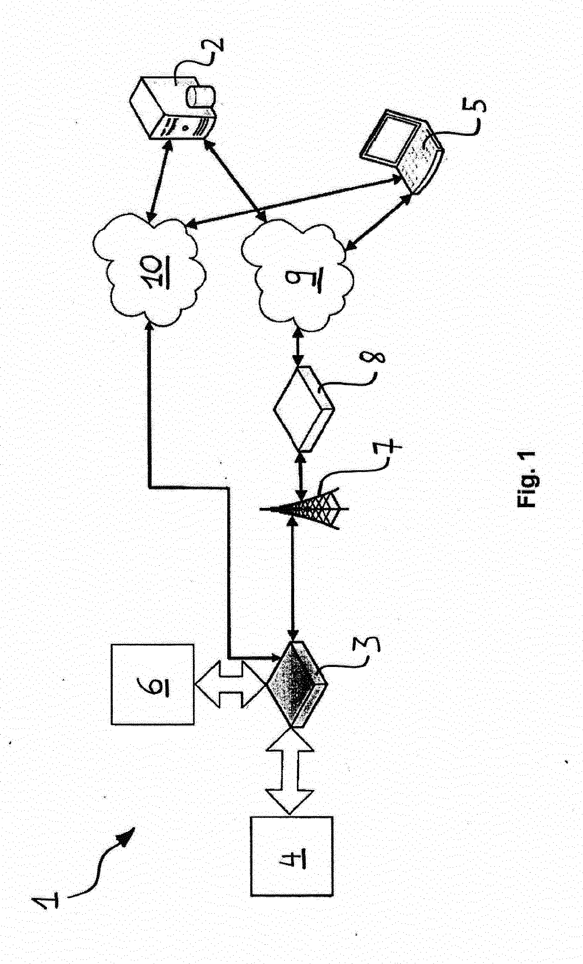

The invention will be further described below with reference to a accompanying drawing, wherein
- Fig. 1: is a schematic representation of an embodiment of the authorization control arrangement according to the invention.

The authorization control arrangement 1 shown in Fig. 1 can be used to temporarily authorize a driver to use a specific vehicle. The authorization control arrangement 1 comprises a server 2, an authorization control module 3, a portable identification device 4 and a client device 5.

The authorization control module 3 has a communication module and is positioned within the vehicle (not shown). The communication module of the authorization control module 3 is configured for a wireless communication with the server 2. The server 2 has a storage device and is positioned remote from the vehicle.

The communication module of the authorization control module 3 and the server 2 communicate with each other by using either a wireless local area network 10 or an internet connection 9. The internet connection 9 between the authorization control module 3 and the server 2 is provided through a transceiver station 7 and a gateway 8, wherein the receiver station 7 and the gateway 8 are configured to receive and send data by using the GPRS, LTE and/or 3G standard.

The authorization control module 3 also communicates with the portable identification device 4. The portable identification device 4 includes a storage device for storing data, such as a USB storage device, a smart card or an RFID card.

The described wireless local area network 10 and the internet connection 9 are also used for the communication between the server 2 and the client device 5. The client device 5 is a portable personal computer. However, the client device may also be a portable communication device, such as a mobile phone.

The portable identification device 4 is coupled with the authorization control module 3. It is plugged in into a compartment of the authorization control module 3 and thereby a wireless data connection between the identification device 4 and the authorization control module 3 is established.

The coupling of the portable identification device 4 with the authorization control module 3 of the vehicle automatically initiates the sending of identification data stored on the storage device of the portable identification device 4 to the communication control module 3.

The authorization control module 3 has also a storage device storing an authorization list, wherein the authorization list includes a plurality of authorization entries. Each authorization entry is allocated to one portable identification device 4 that is authorized to release a function of the vehicle. The authorization control module 3 compares the received identification data with the authorization entries of the stored authorization list in order to check whether the identification device 4 is authorized to release a function of the vehicle. Each authorization entry of the authorization list includes an authorization code, wherein the identification data of the driver's identification device 4 include a unique identification code. The unique identification code matches with one of the authorization codes of the authorization list when the driver's identification device 4 is authorized to use a function of the vehicle. Functions of the vehicle are, for instance, the locking and unlocking function for granting access to the vehicle, the ignition function for starting the vehicle's engine or the tachograph function.

The function of the vehicle to the use of which the driver's portable identification device 4 is authorized, is then automatically released and performed. In order to automatically release and perform the function of the vehicle the authorization control module 3 is coupled with a bus system 6 of the vehicle.

The authorization control module 3 receives the authorization list from the server 2. The sending of the authorization list from the server 2 to the vehicle's authorization control module 3 can be initiated through a command that is sent from the client device 5 to the server 2. Additionally the server is programmed to periodically send the current authorization list to the authorization control module 3, such as every 12 hours or once a day. In case the driver couples his portable identification device 4 with the authorization control module 3 and the identification data that is sent from the driver's portable identification device 4 to the authorization control module 3 of the vehicle does not match with an authorization entry of the authorization list, the authorization control module 3 sends a request to the server 2 to check whether the authorization list stored in the authorization control module 3 matches with the authorization list stored on the server 2. If the authorization list on the authorization control module 3 needs to be updated, the current authorization list is sent from the server 2 to the authorization control module 3. After the authorization control module 3 of the vehicle has received the updated authorization list from the server 2, the authorization control module 3 checks a second time whether the driver's identification device is authorized to release a function of the vehicle.

The authorization list can be generated and modified by means of the client device 5 before it is sent from the client device 5 to the server 2 by using the wireless local area network 10 or an internet connection 9. The initiation of the sending of the authorization list from the client device 5 to the server 2, the generation the authorization and the modification of one or more authorization entries of the authorization list takes place by using a web application software on the client device 5.

## Claims

1. Authorization control method for a vehicle, comprising the steps:
storing an authorization list on a storage device of a server (2), wherein the authorization list includes one or more authorization entries, each authorization entry being allocated to at least one portable identification device (4) that is authorized to release at least one function of the vehicle;
sending the authorization list from the server (2) to a communication module of the vehicle;
sending identification data from the identification device (4) to the communication module; and
checking whether the identification device (4) is authorized to release a function of the vehicle by comparing the identification data with the authorization entries of the authorization list.

2. Authorization control method according to claim 1, comprising at least one of the following steps:
generating the authorization list by means of a client device (5); and
modifying one or more authorization entries of the authorization list by means of the client device (5).

3. Authorization control method according to claim 2, further comprising the step:
sending the authorization list from the client device (5) to the server (2), wherein preferably a local area network (10) and/or an internet connection (9) is used.

4. Authorization control method according to claim 2 or 3, further comprising at least one of the following steps:
initiating the sending of the authorization list from the client device (5) to the server (2) by using an application software, preferably a web application software, on the client device (5);
generating the authorization list by using an application software, preferably a web application software, on the client device (5); and
modifying one or more authorization entries of the authorization list by using an application software, preferably a web application software, on the client device (5).

5. Authorization control method according to one of the preceding claims,
wherein the step of sending the authorization list from the server (2) to the communication module of the vehicle takes place by using a local area network (10) or an internet connection (9).

6. Authorization control method according to one of the preceding claims, further comprising the step:
coupling the identification device (4) with an authorization control module (3) of the vehicle, wherein the step of coupling the identification device (4) with the authorization control module (3) of the vehicle preferably further comprises at least one of the following steps:
plugging in the identification device (4) into a compartment of the authorization control module (3); and
establishing a wireless data connection between the identification device (4) and the authorization control module (3).

7. Authorization control method according to claim 6, wherein the coupling of the identification device (4) with the authorization control module (3) of the vehicle automatically initiates the sending of the identification data from the identification device (4) to the communication module.

8. Authorization control method according to one of the preceding claims, further comprising the step:
releasing the function of the vehicle to which the identification device (4) is authorized, and preferably performing the function of the vehicle to which the identification device (4) is authorized.

9. Authorization control method according to one of the preceding claims,
wherein each authorization entry includes information regarding the scope of authorization rights of the allocated identification device (4).

10. Authorization control arrangement (1) for a vehicle, comprising:
a server (2) having a storage device, the server (2) being remote from the vehicle;
an authorization control module (3) having a communication module, the authorization control module (3) being disposed in the vehicle;
a portable identification device (4); and
a client device (5);
wherein the server (2), the authorization control module (3), the identification device (4) and the client device (5) are configured for communicating with each other according to the authorization control method of one of the preceding claims.

11. Authorization control arrangement (1) according to claim 10,
wherein the authorization control module (3) is coupled with a bus system (6) of the vehicle for releasing a function of the vehicle.

12. Authorization control arrangement (1) according to claim 10 or 11,
wherein the identification device (4) includes a USB storage device, a smart card or an RFID card or wherein the identification device (4) is a mobile communication device.

13. Authorization control arrangement (1) according to one of the claims 10 to 12,
wherein the client device (5) is a personal computer, preferably a portable personal computer, or a portable communication device.
